# EUROPÄISCHE PATENTSCHRIFT

(11) **EP 0 704 391 B1**
(45) Veröffentlichungstag und Bekanntmachung des Hinweises auf die Patenterteilung: **03.06.1998**
(21) Anmeldenummer: 95112812.3
(22) Anmeldetag: 16.08.1995
(51) Int. Cl.: B65G 37/02, B65G 15/10, B65G 15/06, B65G 17/00

(54) **Fördersystem, insbesondere für Materialträger für den labormedizinischen Einsatz**
Conveyor system, in particular for load carriers for application in a medical laboratory
Système de transport, en particulier pour porte-charge pour usage médical

(30) Priorität: 28.09.1994 DE 4434714
(43) Veröffentlichungstag der Anmeldung: 03.04.1996
(73) Patentinhaber: v. Froreich, André, Dr., D-21149 Hamburg (DE)
(72) Erfinder: v. Froreich, André, Dr., D-21149 Hamburg (DE)
(74) Vertreter: von Raffay, Vincenz, Dipl.-Ing.

(56) Entgegenhaltungen:
- EP-A- 0 223 683
- EP-A- 0 340 639
- EP-A- 0 430 739
- DE-A- 4 244 351
- US-A- 1 476 936

## Beschreibung

Grundsätzlich sind die unterschiedlichsten Fördersysteme für Materialträger für den Labormedizinischen Einsatz bekannt. Die Erfindung ist auf ein solches gerichtet, bei dem die beiden endlosen Förderriemen mit kreisrundem Querschnitt parallel zueinander in einer Ebene im Kreislauf geführt sind und so eine Vorlaufförderstrecke und eine Rücklaufförderstrecke bilden, die beide zum Transport der Materialträger in dem Kreislauf zur Verfügung stehen. Hierbei werden die Förderriemen und Materialträger vorzugsweise durch die nach oben abgewinkelten Teile geführt, so daß sie die Transportbahn nicht verlassen.

Der Erfindung liegt nun die Aufgabe zugrunde, ein Fördersystem der eingangs genannten Art zu schaffen, bei dem es möglich ist, die Materialträger von der vorhandenen Transportstrecke abzuzweigen, um dort eine Bearbeitung und Handhabung durchzuführen, die auf der einen Transportstrecke nicht möglich ist. Gleichzeitig soll die Möglichkeit bestehen, die entfernten oder neue Materialträger der Transportstrecke wieder zuzuführen.

Diese Aufgabe wird grundsätzlich durch die Merkmale des Anspruches 1 gelöst.

Erfindungsgemäß ist also eine zweite Transportstrecke vorhanden, die, ebenso wie die erste Transportstrecke, durch die zwei parallelen Förderriemen gebildet wird. Diese zweite Transportstrecke liegt über einem bestimmten Abschnitt neben der ersten Transportstrecke. Dieser Abschnitt dient der Überführung von der einen Transportstrecke auf die andere. Dieses geschieht durch die Weiche. Hierdurch ist es möglich, ausgewählte Materialträger von der ersten Förderstrecke auf die zweite zu überführen. Es ist auch möglich, neue Materialträger von der zweiten auf die erste zu überführen bzw. im voraus abgezweigte Materialträger wieder auf die erste Transportstrecke zurückzuführen.

In vorteilhafter Weise ist die Erfindung so ausgestaltet, wie in Anspruch 2 angegeben. Jedem Materialträger ist eine bestimmte Codierung zugeordnet. Unter der Transportstrecke befinden sich Sensoren, die diese Codierung lesen können und die Bewegung der Weiche entsprechend steuern.

In besonders vorteilhafter Weise sind zwei Weichen vorhanden, von denen eine der Abzweigung und die andere der Rückführung dient (Anspruch 4). Diese Weichen werden gesteuert, wie in Anspruch 2 und 3 näher definiert.

Im folgenden wird die Erfindung unter Hinweis auf die Zeichnung anhand eines Ausführungsbeispieles näher erläutert.

Es zeigt:
- Fig. 1: eine perspektivische Ansicht einer Ausführungsform eines Fördersystems nach der Erfindung schräg von oben;
- Fig. 2: eine perspektivische Ansicht einer Einzelheit der Verbindung von zwei in Längsrichtung hintereinanderliegenden Fördersegmenten;
- Fig. 3: eine perspektivische Einzelheit der Umlenkung um 180°;
- Fig. 4: eine perspektivische Einzelheit der Umlenkung um 90°;
- Fig. 5: eine perspektivische Ansicht der Riemenführung der zweiten Transportstrecke;
- Fig. 6: eine perspektivische Ansicht einer Weiche zur Überführung von der ersten Förderstrecke auf die zweite Förderstrecke;
- Fig. 7: eine Draufsicht auf die Darstellung der Fig. 6;
- Fig. 8: eine perspektivische Ansicht der Weiche zur Rückführung von der zweiten Förderstrecke auf die erste Förderstrecke;
- Fig. 9: eine Draufsicht auf die Darstellung der Fig. 8;
- Fig.10: eine perspektivische Ansicht einer Ausführungsform eines Materialträgers von unten.

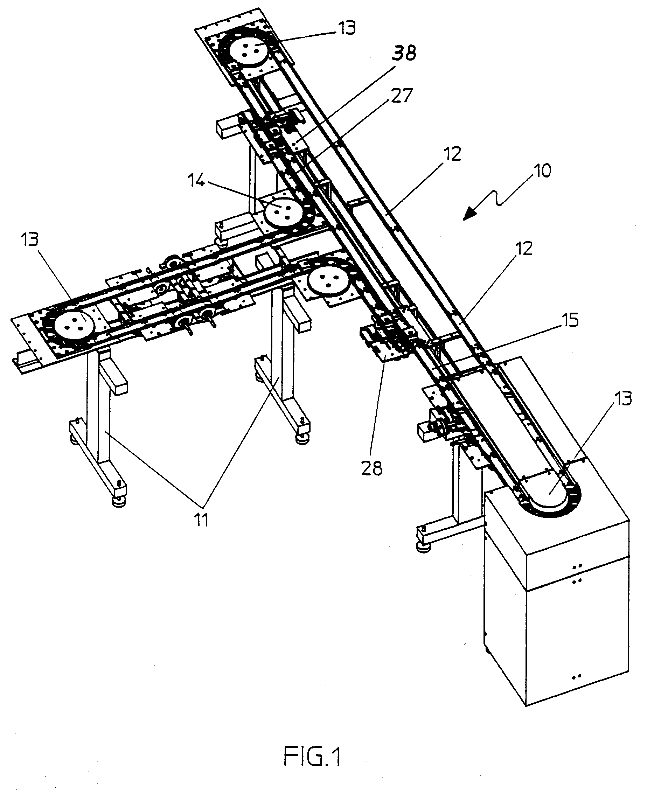

Der Aufbau des Fördersystems, das in seiner Gesamtheit mit der Bezugsziffer 10 versehen ist, soll zunächst unter Bezugnahme auf Fig. 1 näher erläutert werden. Das Fördersystem 10 ruht auf einem Gestell 11 und ist aus einzelnen geraden Segmenten 12, 180°-Kehren 13 und 90°-Umlenkungen 14 zusammengesetzt. Durch diese Modulbauweise läßt sich das Fördersystem 10 in nahezu beliebigen Ausführungsformen ausgestalten. Das Fördersystem 10 ist im Kreislauf geführt, so daß die transportierten Gegenstände Behandlungsstationen durchlaufen und an ihren Ausgangspunkt zurückgeführt werden.

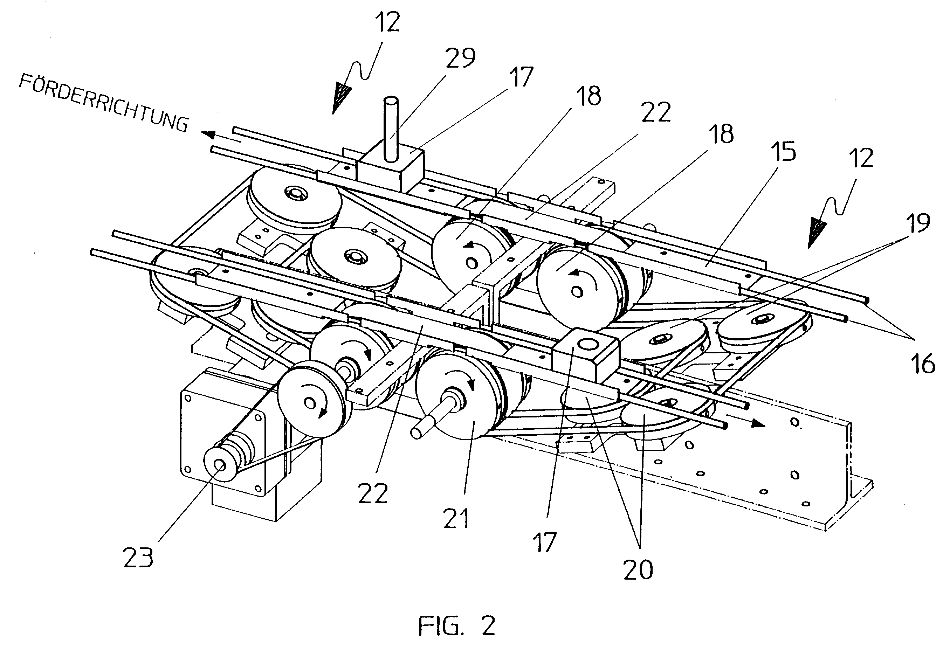

Zur Erläuterung des Fördersystems im einzelnen soll nachfolgend auf Fig. 2 Bezug genommen werden, die einen Ausschnitt in größerem Maßstab zeigt, an welchem zwei gerade Segmente 12 zusammenstoßen. Die Transportbahn 15 wird durch ein im wesentlichen U-förmig abgewinkeltes Blech gebildet, entlang dessen unterer Seitenkanten im Querschnitt im wesentlichen runde elastische Riemen 16 geführt werden. Ein etwa kubisch ausgebildeter Materialträger 17 liegt auf den Riemen 16 auf und wird in der in Fig. 2 durch einen Pfeil wiedergegebenen Förderrichtung transportiert, wobei die Schenkel der U-förmigen Transportbahn 15 eine Seitenführung bilden.

Die Riemen 16 bestehen bevorzugt aus einem thermoplastischen Polyurethan. Die einzelnen geraden Segmente 12 besitzen eine individuelle Riemenführung. Die Riemen 16 werden jeweils am Ende des Segmentes umgelenkt, wobei die beiden aufeinanderzulaufenden Riemenpaare 16 über große Umlenkrollen 18 vertikal nach unten gelenkt und dort über schräggestellte große Rollen 19 in horizontaler Richtung unter die benachbarte Förderbahn 15 geleitet werden. Hier übernehmen in analoger Weise zwei Rollenpaare 20 die Umlenkung in horizontale Richtung und große Rollenpaare 21 in vertikale Richtung, um das Riemenpaar in die entgegengesetzte Förderrichtung zu leiten. Es werden somit beide Riementrume der Transportriemen 16 zur Förderung eingesetzt.

Besonders vorteilhaft erweisen sich die relativ großen Rollen, welche die verformungsbedingte Riemenbelastung und deshalb auch die Antriebskraft minimieren. Die Anordnung der horizontal umlenkenden Rollen 19, 20 minimiert die Schlupfneigung erheblich. Die Schrägstellung der horizontal umleitenden Rollen 19, 20 spart Bauvolumen und paßt sich dem gegebenen Rastermaß eines stabilen Trägersystems an.

Der kontinuierliche Weitertransport der Materialträger 17 zwischen den Riemenpaaren einzelner Segmente wird mit Hilfe von breiten Zahnriemen 22 gebildet. Diese können an den gewünschten Stellen zusätzlich Antriebsmomente übertragen. Damit ist es möglich, mit nur einem Antrieb 23 zwei Streckensegmente 12 direkt anzutreiben. Übergangsstellen, an denen die Drehmomentübertragung hinderlich ist, werden durch eine Freilauf-Lagerung einer Zahnscheibe pro breitem Zahnriemen 22 entkoppelt.

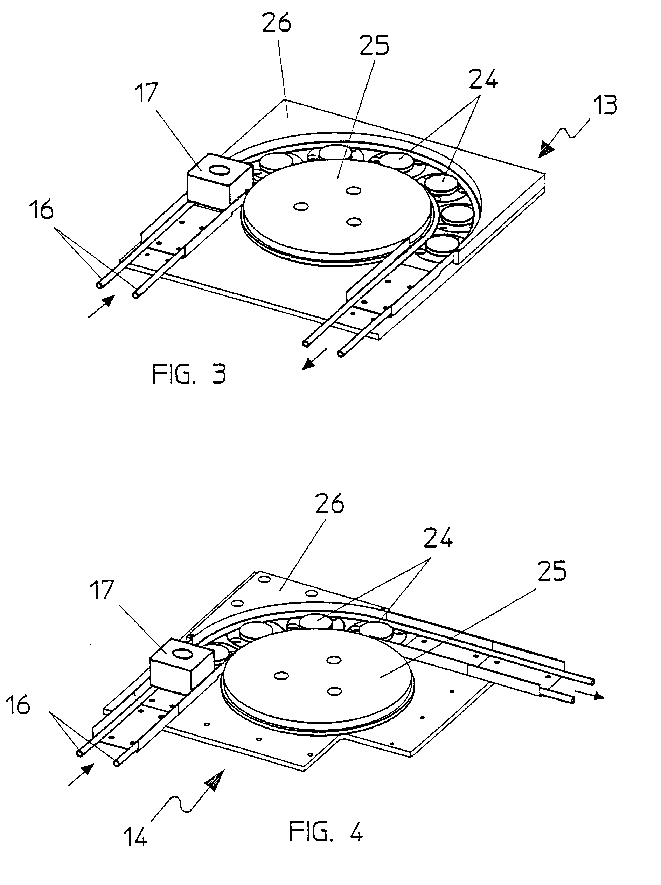

In der Horizontalebene gewundene Streckenführungen werden durch Umlenken der Riemen 16 an Rollen 24, 25 mit nach oben nicht überstehender Riemenauflagebreite realisiert. Die Fig. 3 zeigt ein Segment 13, bei welchem das Transportriemenpaar 16 um 180° umgelenkt wird. Eine große Rolle 25 dient der Umlenkung des inneren Riemens. Sie besitzt eine Umfangsnut zur Führung des Riemens und weist eine axiale Ausdehnung auf, die geringer ist als der Durchmesser des Riemens, so daß der Materialträger auch im Kurvenbereich auf dem Riemen aufliegt. Zur Umlenkung des äußeren Riemens sind, wie die Fig. 3 zeigt, mehrere Rollen 24 kleineren Durchmessers vorgesehen, deren struktureller Aufbau demjenigen der großen Rolle 25 entspricht. Die große Rclle 25 läßt sich ebenfalls durch eine Reihe menrerer kleinerer Rollen ersetzen. Eine der Krümmung angepaßte Schulter eines Kurvenelementes 26 dient der Seitenführung des Materialträgers 17.

Ein Beispiel für die Umlenkung des Riemenpaares 16 um 90° ist in Fig. 4 wiedergegeben. Auch hier dient der Umlenkung des inneren Riemens eine große Rolle 25, während für die Umlenkung des äußeren Riemens mehrere kleinere Rollen 24 vorgesehen sind. Der Aufbau der Rollen 25 und 24 des Kurvenelementes 14 entspricht demjenigen des Kehrenelementes 13. Auch hier ist ein Kurvenelement 26 vorgesehen, dessen Schulter der Seitenführung des Materialträgers 17 dient.

Die Fig. 1 zeigt in schematischer Darstellung eine über einen Streckenabschnitt der Transportbahn 15 parallel geführte zusätzliche Transportbahn 27. Über eine Weiche 28 lassen sich vorbestimmte Materialträger 17 von der Transportbahn 15 auf die Parallelbahn 27 schieben. Damit können diese vorbestimmten Materialträger anderen oder zusätzlichen Anlaufstellen zugeführt werden.

Die Materialträger 17 sind im wesentlichen kubisch ausgebildet und tragen, gemäß der hier dargestellten Ausführungsform, eine Mittelöffnung, die etwa der Aufnahme eines Probenröhrchens 29 dient. Der Materialträger 17 ist auf seiner Unterseite mit einer Codierung versehen, wobei im Zuführungsbereich der Weiche die Identifikation des Probenträgers über quer zur Laufrichtung angeordnete Näherungsinitiatoren erfolgt. Die Betätigung der Weiche erfolgt dementsprechend in Abhängigkeit von der jeweiligen Codierung des Probenträgers.

Bei dem in Fig. 1 dargestellten Fördersystem sind also zwei nebeneinanderliegende Förderstrecken 15 und 27 vorhanden, die grundsätzlich unabhängig voneinander arbeiten und angetrieben werden. Sie sind nach dem gleichen Prinzip aufgebaut, bei dem die runden Förderriemen 16 und 36 parallel nebeneinander gleichsinnig auf einer Förderbahn gefördert werden, wobei eine Hinförderbahn und eine Rückförderbahn zur Verfügung steht.

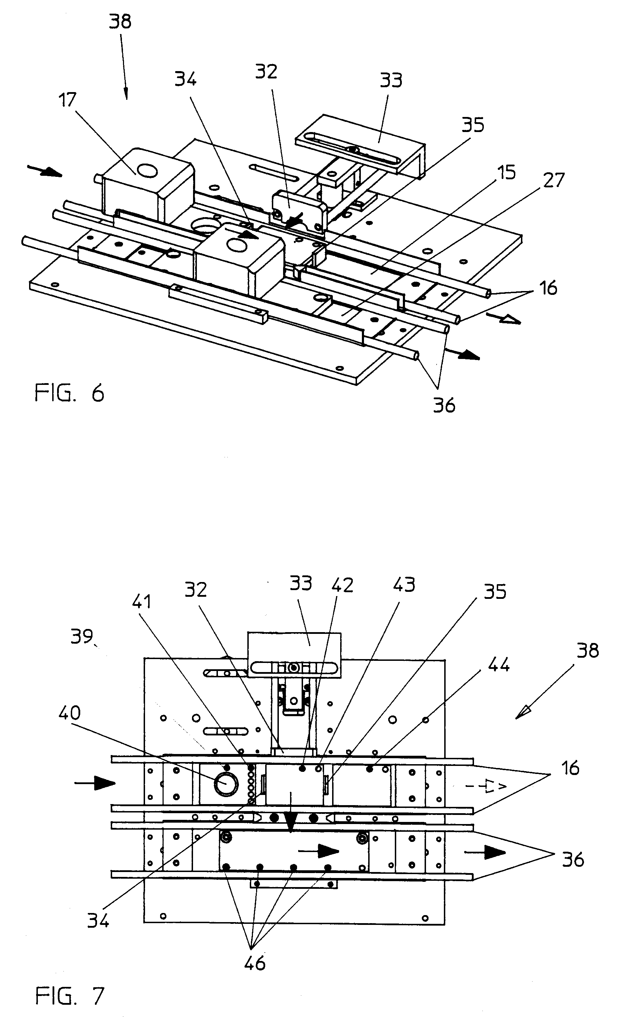

Neben der ersten Förderstrecke 15 befindet sich die zweite Förderstrecke 27, deren Riemenführung noch einmal in Fig. 5 dargestellt ist. Die beiden parallelen, runden Förderriemen 36 laufen in gleicher Richtung. Bei der dargestellten Ausführungsform nach Art eines T's, grenzt der Querbalken des T's an die erste Förderstrecke 15 an. In diesem Bereich erfolgt die Rückführung (Leertrum) unterhalb der Förderebene. Hier existiert also keine rücklaufende Förderspur. Der senkrechte Balken des T's wird durch zwei parallele Förderbahnen gebildet, die grundsätzlich denjenigen der Förderstrecke 15 entsprechen. Diese sind, wie in Fig. 1 dargestellt, auch in Längsrichtung verlängerbar, d.h. dort schließt sich ein weiteres Fördersegment an, so, wie es vorstehend beschrieben wurde.

In den Fig. 6 bis 9 sind nun zwei Weichen dargestellt, die in Fig. 1 erkennbar und dort mit 28 und 38 bezeichnet sind. Die Weiche 38 dient der Überführung eines Materialträgers von der ersten Transportstrecke 15 auf die zweite Transportstrecke 27. Die Weiche 28 dient der Rückführung oder Zuführung eines neuen Materialträgers 17.

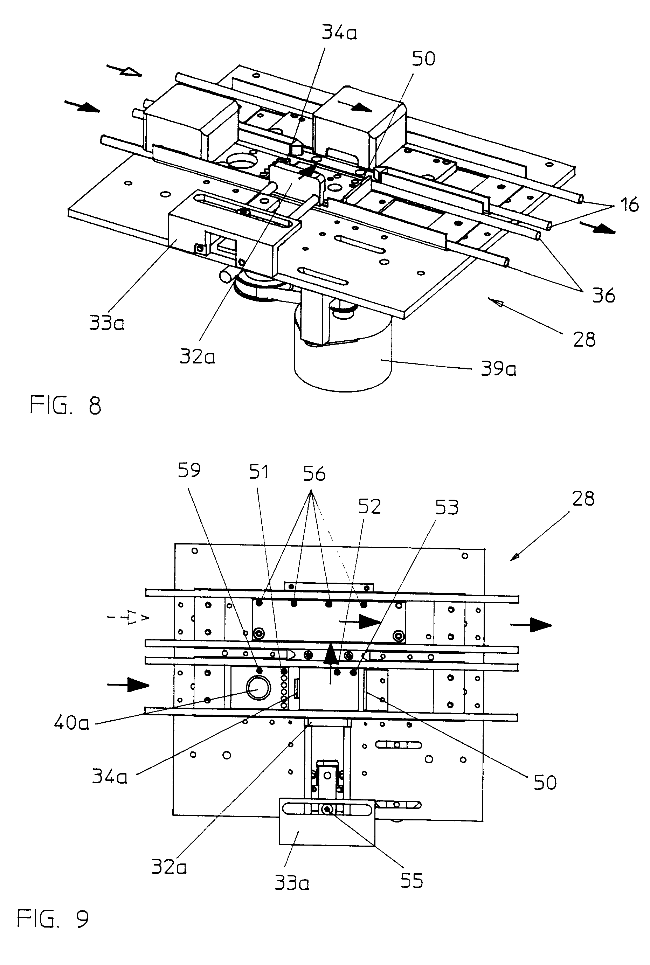

In den Fig. 6 und 7 ist die Weiche 38 im einzelnen dargestellt. Die Weiche 28, die in den Fig. 8 und 9 dargestellt ist, ist grundsätzlich ebenso aufgebaut. Gleiche Teile sind mit gleichen Bezugszeichen bezeichnet.

In Fig. 6 sind die beiden parallel zueinander verlaufenden Förderriemenpaare 16 und 36 erkennbar, die praktisch die beiden Förderstrecken 15 und 27 bilden. Die Weiche 38 wird durch einen Querschieber 32 mit einem Exzenterantrieb 33 gebildet. Unterhalb des Förderers befindet sich ein Antrieb, der lediglich in Fig. 8 erkennbar und dort mit 39a bezeichnet ist. Im Bereich der Transportstrecke 15 befinden sich zwei auf- und abbewegbare Sperrschieber 34 und 35, die die Materialträger vereinzeln und in Verbindung mit dem Querschieber für die Überführung sorgen, wenn diese gewünscht wird.

In Fig. 6 sind verschiedene Initiatoren 41 bis 46 dargestellt, die, wie später beschrieben, die Bewegungen des Querschiebers und der Sperrschieber steuern.

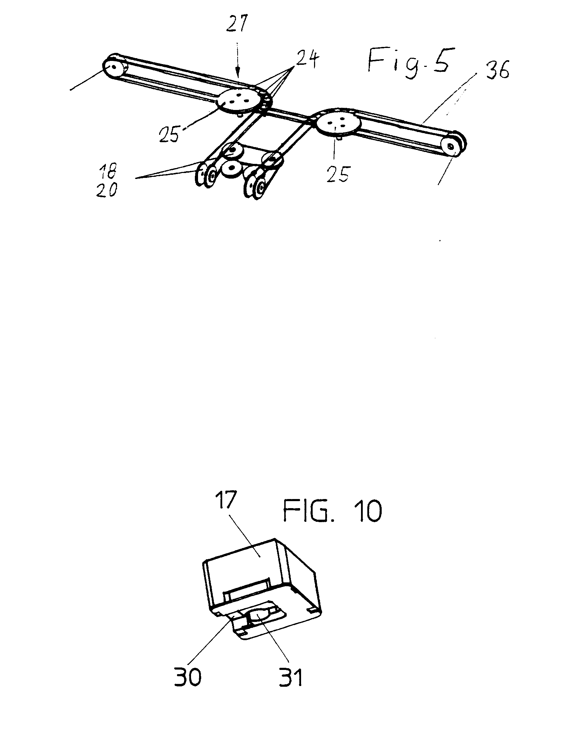

Ein Lesekopf ist mit 40 bezeichnet. Dieser liest die Codierung 31 auf der Unterseite des Materialträgers (siehe Fig. 10). In Fig. 10 ist auch noch eine Aussparung 30 erkennbar.

Die in den Fig. 8 und 9 dargestellte Weiche 28 ist ähnlich aufgebaut, wobei diese lediglich der "Rückführung" eines Materialträgers 17 dient. Der Querschieber ist mit 32a und ein Sperrschieber ist mit 34a bezeichnet. Da ein unbeabsichtigtes Herunterfallen am Ende der Transportstrecke 27 sicher verhindert werden muß, ist dort - anstelle des Sperrschiebers 35 der Weiche 38 - ein fester Anschlag 50 vorgesehen.

Die Initiatoren, die diese Weiche 28 steuern, sind mit 51 bis 56 bezeichnet. Der Lesekopf dieser Weiche ist entsprechend mit 40a bezeichnet.

Ein wie in Fig. 10 dargestellter Materialträger 17, der sich auf der ersten Transportstrecke 15 bewegt, läuft in den Bereich der Weiche 38 ein und trifft dort auf den Sperrschieber 34. Der Initiator 41 registriert die Position dieses Materialträgers vor dem Sperrschieber und initiiert das Lesen der Codierung 31 mit dem Lesekopf 40. Die Codierung identifiziert eindeutig den entsprechenden Materialträger. Eine übergeordnete Steuerung entscheidet, ob der identifizierte Materialträger auf die parallel verlaufende zweite Transportstrecke 27 verschoben werden soll. Ist dieses der Fall, senkt sich der Sperrschieber 34 und der Materialträger läuft auf den zweiten Sperrschieber 35 auf. Auf dem Weg dorthin erkennt der Initiator 42 die Position, in der der Sperrschieber in die hintere Aussparung 30 (Fig. 10) des Materialträgers stoßen kann, um einen direkt nachfolgenden Materialträger zu stoppen. Die Endlage am Sperrschieber 35 wird durch den Initiator 43 erkannt. Der Initiatoren 46 erkennt, ob der Arbeitsraum der Weiche 38 frei ist und während der Zeitspanne des Schiebers freibleiben wird. Ist dies nicht der Fall, wird der Exzentertrieb 33 der Weiche gestartet und der Materialträger durch den Querschieber 32 auf die andere Transportstrecke 27 verschoben.

Entscheidet die übergeordnete Steuerung, daß der Materialträger die Weiche passieren soll, senken sich beide Sperrschieber 34 und 35. Der Materialträger wird von den Förderriemen auf der ersten Transportstrecke 15 weitergefördert. Die Initiatoren 42 und 44 erkennen, wie in dem vorstehend geschilderten Fall, die Positionen, in denen der jeweils vorhergehende Sperrschieber in die Aussparung 30 des Materialträgers stoßen kann, um nachfolgende Materialträger zu stoppen.

Die Weiche 28, die der "Rückführung" dient, ist ähnlich aufgebaut und arbeitet grundsätzlich nach dem gleichen Prinzip. Ein Materialträger, der von der zweiten Transportstrecke 27 auf die erste Transportstrecke 15 geführt werden soll, läuft in der Weiche 28 über den abgesenkten Querschieber 32a auf den festen Anschlag 50 auf. Ein evtl. direkt nachfolgender Materialträger wird von einem Initiator 59 registriert. Sollte ein Materialträger direkt nachfolgen, veranlaßt der Initiator 52, daß der Querschieber 32a in die Aussparung 30 des Materialträgers stößt, um den Arbeitsraum der Weiche für nachfolgende Materialträger zu sperren. Daß ein Materialträger vor den festen Anschlag 50 gelaufen ist, registriert der Initiator 53. Initiatoren 56 registrieren, ob der Arbeitsraum der Weiche 28 frei ist und während der Zeitspanne des Schiebens freibleiben wird. Ist dies der Fall, wird der Exzenterantrieb 33a gestartet und der Materialträger auf die Förderstrecke 15 geschoben. Der Initiator 55 registriert die Endlage des Exzenterhebels und somit das Ende der Aktion. Der Sperrschieber 34a gibt die Weiche für den nächsten Materialträger frei.

## Patentansprüche

1. Fördersystem, insbesondere für Materialträger (17) für den labormedizinischen Einsatz, mit zwei endlosen,
motorisch angetriebenen, im Transportbereich parallel und gleichsinnig in einer waagerechten Ebene geführten Förderriemen (16), die auf in Transportrichtung verlaufenden,
nach oben abgewinkelten Teilen geführt sind, und die am Anfang und am Ende (13) einer Transportstrecke in der Transportebene um Umlenkrollen (24,25) laufen,
über einen vorbestimmten Abschnitt der Transportstrecke (15) parallel zu und neben dieser eine zweite Transportstrecke (27) mit zwei endlosen, unabhängig angetriebenen,
im Transportbereich parallel und gleichsinnig in einer waagerechten Ebene geführten, Förderriemen (36) angeordnet ist,
eine Weiche (28) zur Überführung der Materialträger (17) von der einen auf die andere Transportstrecke vorgesehen ist,
die Förderriemen (36) der zweiten Transportstrecke nach Art eines T's eine Umlenkung (14) um 90° aufweisen, und
die Rückführung (Leertrum) der Förderriemen (36) der zweiten Transportstrecke in dem den Querbalken des T's bildenden, parallel zu der ersten Transportstrecke verlaufenden Bereich unterhalb der Förderebene erfolgt.

2. Fördersystem nach Anspruch 1, dadurch gekennzeichnet, daß die Materialträger (17) auf ihrer Unterseite mit einer Codierung (21) versehen sind, die über unter der Transportstrecke (15,27) angeordnete Initiatoren identifizierbar ist, um die Weiche (28) zu steuern.

3. Fördersystem nach Anspruch 2, dadurch gekennzeichnet, daß die Initiatoren (Näherungsinitiatoren (51 bis 56), Lesekopf (40a)) unter der Transportstrecke (15,17) in dem Zwischenraum zwischen den entsprechend beabstandeten Förderriemen (16,36) angeordnet sind.

4. Fördersystem nach Anspruch 1, dadurch gekennzeichnet, daß zwei Weichen (28,38) vorgesehen sind, von denen eine (28) der Überführung von der ersten (15) auf die zweite Transportstrecke (27) und die zweite (38) der Rückführung dient.

5. Fördersystem nach Anspruch 2 und 4, dadurch gekennzeichnet, daß für die zweite Weiche (38) ebenfalls Initiatoren vorgesehen sind, die durch Näherungsinitiatoren (41 bis 48) zur Registrierung der Position eines Materialträgers (17) und einen Lesekopf (40) gebildet sind.

6. Fördersystem nach Anspruch 4, dadurch gekennzeichnet, daß jede Weiche (28,38) einen Querschieber (32,32a), der der Verschiebung eines Materialträgers (17) von der einen auf die andere Transportstrecke (15,27) dient und mindestens einen Sperrschieber (34,34a; 35) aufweist, der in den Transportbereich der Materialträger (17) auf der Transportstrecke schiebbar sind, von der die Materialträger (17) verschoben werden soll.

7. Fördersystem nach Anspruch 4 und 6, dadurch gekennzeichnet, daß die Weiche (38) zur Überführung der Materialträger (17) von der ersten (15) auf die zweite (27) Transportstrecke zwei Sperrschieber (34,35) und die Weiche (28) zur Rückführung einen Sperrschieber (34a) und einen festen Anschlag (50) aufweisen.

8. Fördersystem nach Anspruch 1, dadurch gekennzeichnet, daß die Förderriemen (16,36) einen runden Querschnitt aufweisen.

## Claims

1. Conveyor system, particularly for material supports (17) for use in medical laboratories, with two continuous, motor-driven conveyor belts (16), which are parallel in the conveying area and guided in the same direction in a horizontal plane and which are guided in upwardly bent parts running in the conveying direction and which at the start and end (13) of a conveyor section in the conveyor plane run round guide pulleys (24, 25), over a predetermined portion of the conveyor section (15) and in parallel therewith and alongside the same is provided a second conveyor section (27) with two continuous conveyor belts (36), which are independently driven, parallel in the conveying area and guided in the same direction in a horizontal plane, points (28) for the transfer of the material support (17) from one to the other conveyor section, the conveyor belts (36) of the second conveyor section have in the manner of a T a 90° deflection (14) and the return (return strand) of the conveyor belts (36) of the second conveyor section takes place in the area below the conveyor plane forming the crossbar of the T and running parallel to the first conveyor section.

2. Conveyor system according to claim 1, characterized in that the underside of the material support (17) is provided with a coding (21) identifiable by means of initiators located below the conveyor section (15, 27) in order to control the points (28).

3. Conveyor system according to claim 2, characterized in that the initiators (proximity initiators (51 to 56), reading head (40a)) are located below the conveyor section (15, 17) in the space between the correspondingly spaced conveyor belts (16, 36).

4. Conveyor system according to claim 1, characterized in that two points (28, 38) are provided, whereof one (28) is used for the transfer from the first (15) to the second conveyor section (27) and the other (38) for the return.

5. Conveyor system according to claim 2 and 4, characterized in that initiators are also provided for the second points (38), which are formed by proximity initiators (41, 48) for recording the position of a material support (17) and a reading head (40).

6. Conveyor system according to claim 4, characterized in that each points (28, 38) having a transverse slide (32, 32a) responsible for sliding a material support (17) from one to the other conveyor section (15, 27) and having at least one blocking slide (34, 34a, 35), which are slidable in the conveying area of the material support (17) on the conveying section serving to slide the material support (17).

7. Conveyor system according to claim 4 and 6, characterized in that the points (38) have for the transfer of the material support (17) from the first (15) to the second (27) conveyor section two blocking slides (34, 35) and the points (28) for the return have one blocking slide (34a) and a fixed stop (50).

8. Conveyor system according to claim 1, characterized in that the conveyor belts (16, 36) have a round cross-section.

## Revendications

1. Système de transport, en particulier pour porte-charge (17) pour une utilisation en laboratoire médical, comprenant deux courroies de transport (16) sans fin entraînées par moteur et guidées dans la zone de transport parallèlement et dans le même sens dans un plan horizontal, lesquelles courroies de transport sont guidées sur des éléments coudés vers le haut s'étendant dans la direction de transport et passent au début et à la fin (13) d'un trajet de transport dans le plan de transport autour de poulies de renvoi (24, 25),
un deuxième trajet de transport (27) est disposé sur un tronçon prédéterminé du trajet de transport (15), parallèlement à celui-ci et à côté de celui-ci et comporte deux courroies de transport (36) sans fin entraînées indépendamment et guidées dans la zone de transport parallèlement et dans le même sens dans un plan horizontal,
un dispositif d'aiguillage (28) est prévu pour transférer les porte-charges (17) d'un trajet de transport sur l'autre,
les courroies de transport (36) du deuxième trajet de transport comportant à la manière d'un T un coude (14) de 90° et le retour (brin de retour) des courroies de transport (36) du deuxième trajet de transport s'effectuant sous le plan de transport dans la zone qui forme la barre transversale du T et s'étend parallèlement au premier trajet de transport.

2. Système de transport selon la revendication 1, caractérisé en ce que les porte-charges (17) sont pourvus sur leur face inférieure d'un code (21) qui peut être identifié par des commutateurs disposés sous le trajet de transport (15, 27) pour commander le dispositif d'aiguillage (28).

3. Système de transport selon la revendication 2, caractérisé en ce que les commutateurs (déclencheurs de proximité (51 à 56), tête de lecture (40a)) sont disposés sous le trajet de transport (15, 27) dans l'espace intermédiaire compris entre les courroies de transport (16, 36) espacées.

4. Système de transport selon la revendication 1, caractérisé en ce qu'il est prévu deux dispositifs d'aiguillage (28, 38) dont l'un (28) sert au transfert du premier (15) sur le deuxième (27) trajet de transport et dont le deuxième (38) sert au retour.

5. Système de transport selon les revendications 2 et 4, caractérisé en ce que pour le deuxième dispositif d'aiguillage (38) il est également prévu des commutateurs qui sont formés par des déclencheurs de proximité (41 à 48) destinés à enregistrer la position d'un porte-charge (17) et par une tête de lecture (40).

6. Système de transport selon la revendication 4, caractérisé en ce que chaque dispositif d'aiguillage (28, 38) comporte un coulisseau transversal (32, 32a) qui sert au déplacement d'un porte-charge (17) de l'un des trajets de transport (15, 27) sur l'autre et au moins un coulisseau d'arrêt (34, 34a ; 35) qui peut être amené dans la zone de transport des porte-charges (17) sur le trajet de transport à partir duquel les porte-charges (17) doivent être déplacés.

7. Système de transport selon les revendications 4 et 6, caractérisé en ce que le dispositif d'aiguillage (38) destiné à transférer les porte-charges (17) du premier (15) sur le deuxième (27) trajet de transport comporte deux coulisseaux d'arrêt (34, 35) et le dispositif d'aiguillage (28) destiné au retour comporte un coulisseau d'arrêt (34a) et une butée (50) fixe.

8. Système de transport selon la revendication 1, caractérisé en ce que les courroies de transport (16, 36) présentent une section ronde.
